# FASCICULE DE BREVET EUROPEEN

(11) **EP 3 452 868 B1**
(45) Date de publication et mention de la délivrance du brevet: **31.08.2022**
(21) Numéro de dépôt: 17720481.5
(22) Date de dépôt: 28.04.2017
(51) Int. Cl.: G02B 27/01

(54) **DISPOSITIF DE PROJECTION D'IMAGES POUR AFFICHEUR TÊTE HAUTE AVEC VOLET DE PROTECTION EN DEUX PARTIES ET AFFICHEUR TÊTE HAUTE ASSOCIÉS**
BILDPROJEKTIONSVORRICHTUNG FÜR EINE HEAD-UP-ANZEIGE MIT ZUGEHÖRIGER ZWEITEILIGER SCHUTZKLAPPE UND HEAD-UP-ANZEIGE
IMAGE-PROJECTION DEVICE FOR A HEAD-UP DISPLAY WITH ASSOCIATED TWO-PART PROTECTIVE FLAP AND HEAD-UP DISPLAY

(30) Priorité: 03.05.2016 FR 1654000
(43) Date de publication de la demande: 13.03.2019
(73) Titulaire: Valeo Comfort and Driving Assistance, 94046 Créteil Cedex (FR)
(72) Inventeur: MERMILLOD, Pierre, 94046 Créteil Cedex (FR); DELPIERRE, Laurent, 94046 Créteil Cedex (FR); GRANDCLERC, François, 94046 Créteil Cedex (FR)
(74) Mandataire: Delplanque, Arnaud
(86) Numéro de dépôt international: PCT/EP2017/060218
(87) Numéro de publication internationale: WO 2017/191055

(56) Documents cités:
- WO-A1-2007/057608
- WO-A1-2012/007305
- US-A1- 2002 166 273

## Description

### DOMAINE TECHNIQUE AUQUEL SE RAPPORTE L'INVENTION

La présente invention concerne un dispositif de projection d'images et un afficheur tête haute comprenant un tel dispositif de projection d'images.

Plus précisément, elle concerne un dispositif de projection d'images pour afficheur tête haute comprenant une unité de génération d'images et un conduit de protection reliant cette unité de génération d'images à une ouverture autorisant la projection, à l'extérieur du conduit de protection, de l'image générée par l'unité de génération, et comportant un volet de protection mobile en pivotement entre une position d'obturation dans laquelle il obture ladite ouverture et une position de libération dans laquelle il est logé à l'intérieur du conduit de protection et libère ladite ouverture de manière à permettre la projection desdites images.

### ARRIERE-PLAN TECHNOLOGIQUE

Le principe des afficheurs tête haute pour véhicule est de projeter des images, notamment utiles à la conduite, directement dans le champ de vision d'un conducteur.

En général, les afficheurs tête haute comprennent une lame semi-transparente placée dans le champ de vision du conducteur, et un dispositif de projection d'images formé par une unité de génération d'images adaptée à générer des images, et par une unité de renvoi des images générées adaptée à renvoyer ces images vers cette lame semi-transparente.

On connaît par exemple un tel afficheur tête haute, dont la lame semi-transparente est le parebrise du véhicule, et dont le dispositif de projection d'images comprend un écran à cristaux liquides rétroéclairé par plusieurs sources lumineuses de type LED et un miroir réfléchissant.

L'écran et le miroir réfléchissant sont classiquement logés dans un conduit qui guide la lumière depuis l'écran jusqu'au miroir et du miroir vers une ouverture de sortie à travers laquelle la lumière sort du dispositif de projection en direction du parebrise.

Un inconvénient de cet agencement est lié au fait que cette ouverture de sortie reste ouverte même lorsque le dispositif de projection est inutilisé, de telle sorte que la poussière, le rayonnement ultra-violet ou infra-rouge de la lumière ambiante, des projections d'eau et/ou des objets étrangers tels que clefs, crayon, papier ou pièce de monnaie par exemple, peuvent pénétrer dans le conduit et endommager ou salir le miroir et/ou l'écran, ce qui diminue les performances du dispositif d'affichage.

On connait des dispositifs de projection comportant un volet de protection mobile entre une position d'obturation dans laquelle il obture l'ouverture de sortie et une position de libération dans laquelle il libère ladite ouverture de sortie.

Cependant, dans certains cas, la dimension maximale du volet lui permettant d'être logé dans le conduit de protection dans sa position de libération est trop petite pour que le volet obture la totalité de l'ouverture de sortie du conduit de protection dans la position d'obturation.

Le volet ne permet pas alors de protéger efficacement l'unité de génération d'image logée dans le conduit de protection. Le document US 2002/166273 A1 divulgue un dispositif de projection d'images pour afficheur tête haute comprenant un volet de fermeture en deux parties mobiles. Le document WO 2007/057608 A1 divulgue un dispositif de projection d'images pour afficheur tête haute comprenant un volet de fermeture en une seule partie, qui se trouve dans un conduit de protection une fois replié.

### OBJET DE L'INVENTION

Afin de remédier aux inconvénients précités de l'état de la technique, la présente invention propose un dispositif de projection comprenant un moyen d'obturation de ladite ouverture adapté à obturer entièrement ladite ouverture de sortie tout en pouvant être logé dans un espace réduit à l'intérieur du conduit de protection.

Plus particulièrement, on propose selon l'invention un dispositif de projection tel que défini dans la revendication 1. Des modes de réalisation additionnels sont définis dans les revendications dépendantes.

Ainsi, grâce à l'invention, il est possible de loger le volet à l'intérieur du conduit de protection dans une configuration du volet dans laquelle les deux parties occupent un espace réduit et de fermer entièrement l'ouverture dudit conduit grâce au volet dans une configuration dans laquelle les deux parties couvrent l'ensemble de l'ouverture de sortie.

En d'autres termes, la position relative des deux parties du volet peut être différente dans la position de libération et la position d'obturation, ce qui permet de loger le volet dans le conduit de protection et de couvrir toute l'ouverture de sortie du conduit dans la position d'obturation.

Grâce à l'invention, cela est réalisé de manière simple, rapide et efficace. L'unité de génération d'images est protégée de la poussière, des projections d'eau et/ou du rayonnement ultra-violet ou infrarouge.

D'autres caractéristiques non limitatives et avantageuses du dispositif de projection selon l'invention conforme à l'invention sont les suivantes.

Avantageusement, lequel ledit volet est constitué d'un élément de paroi interne du conduit de protection. La fabrication du dispositif de projection est ainsi économique. L'encombrement lié au volet est réduit.

Selon une autre caractéristique avantageuse, ledit volet comprend un élément d'obturation distinct de la paroi interne du conduit de protection. Le conduit de protection peut alors former une enceinte fermée.

Selon une autre caractéristique avantageuse, lesdites deux parties sont articulées entre elles. La fabrication et la mise en œuvre sont alors simples et rapides.

Selon une autre caractéristique avantageuse, lesdites deux parties sont repliées de manière à former un premier angle non nul strictement inférieur à 180° entre elles dans la position de libération et sont dépliées dans la position d'obturation de manière à former un deuxième angle supérieur audit premier angle.

Selon une autre caractéristique avantageuse, le mouvement de l'une des deux parties du volet entre la position d'obturation et la position de libération du volet entraîne le mouvement de l'autre partie. La mise en œuvre du volet est ainsi simple et rapide.

Selon une autre caractéristique avantageuse, ledit volet est monté mobile sur une partie du conduit de protection entourant ladite ouverture à une première extrémité de ce volet.

Selon une autre caractéristique avantageuse, il est prévu en outre dans le conduit de protection des moyens de guidage d'une deuxième extrémité de ce volet, opposée à la première, entre lesdites deux positions de ce volet. La mise en œuvre du volet est ainsi facilitée.

Selon une autre caractéristique avantageuse, il est prévu en outre, dans le conduit de protection, une unité de renvoi des images générées, autorisant l'acheminement des images générées par le dispositif de génération d'image vers ladite ouverture. Cet arrangement présente l'avantage de limiter l'encombrement du dispositif de projection.

Selon une autre caractéristique avantageuse, ledit volet s'étend à partir de ladite ouverture, sur un côté du conduit de protection opposé à ladite unité de renvoi.

Selon une autre caractéristique avantageuse, ledit volet est adapté, dans sa position d'obturation, à protéger l'unité de renvoi et l'unité de génération d'image de la poussière et/ou de la lumière et/ou de projections d'eau.

Selon une autre caractéristique avantageuse, les dimensions dudit élément de paroi sont telles que celui-ci est adapté à obturer complètement ladite ouverture dans la position d'obturation.

Selon une autre caractéristique avantageuse, il est prévu un mécanisme d'obturation et de libération adapté à déplacer ledit volet de protection entre ses deux positions d'obturation et de libération.

Selon une autre caractéristique avantageuse, ledit volet de protection s'étend à partir de ladite ouverture, sur un côté du conduit de protection disposé.

L'invention propose également un afficheur tête haute comprenant un dispositif de projection d'images selon l'une des revendications précédentes, et une lame semi-transparente sur laquelle l'unité de renvoi d'images est adaptée à renvoyer les images générées par l'unité de génération d'images.

D'autres caractéristiques non limitatives et avantageuses de l'afficheur conforme à l'invention sont les suivantes :
- la lame semi-transparente est un combineur rétractable dans un logement de protection dudit dispositif de projection d'images ;
- il est prévu des moyens de déplacement du combineur adapté à déplacer le combineur entre une position déployée dans laquelle il fait saillie par rapport audit logement de protection du dispositif de projection d'images, et une position rétractée dans laquelle il est logé à l'intérieur dudit logement de protection du dispositif de projection d'images et dans lequel le dispositif de projection comprend un mécanisme d'obturation et de libération adapté à déplacer ledit volet entre ses deux positions d'obturation et de libération, qui est couplé auxdits moyens de déplacement du combineur de telle sorte que le déplacement du combineur vers sa position déployée soit couplé au déplacement du volet vers sa position de libération, et que le déplacement du combineur vers sa position rétractée soit couplé au déplacement du volet vers sa position d'obturation ;
- lesdits moyens de déplacement du combineur sont adaptés à déplacer le combineur autour de sa position déployée sans déplacer ledit volet ;
- la lame semi-transparente comprend une partie du parebrise d'un véhicule dans lequel le dispositif de projection est installé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'un afficheur tête haute selon l'invention ;
- la figure 2 est une représentation schématique d'un premier mode de réalisation du dispositif de projection selon l'invention, avec le volet de protection en position de libération de l'ouverture de sortie de la lumière (trait plein), et en position d'obturation (trait pointillé) ;
- la figure 3 est une représentation schématique d'un deuxième mode de réalisation du dispositif de projection selon l'invention, dans lequel le volet de protection est en position de libération de l'ouverture ; et,
- la figure 4 est une représentation schématique du dispositif de projection de la figure 3, dans lequel le volet de protection est en position d'obturation de l'ouverture,
- la figure 5 est une représentation schématique du volet de protection du dispositif de projection de la figure 3 dans ses deux positions (en pointillé en position d'obturation et en trait plein en position de libération).

Dans la suite de la description, les termes « inférieur » et « supérieur » seront utilisés pour désigner les éléments en position dans le véhicule automobile, par rapport à la direction verticale dudit véhicule automobile. La partie inférieure d'un élément désignera la partie de cet élément qui est située du côté du plancher du véhicule et la partie supérieure désignera la partie de cet élément qui est située du côté du toit.

Les éléments similaires ou correspondants des différents modes de réalisation décrits seront référencés par les mêmes signes et ne seront pas décrits en détails à chaque fois.

En pratique, ici, les deux modes de réalisation des dispositifs de projection décrits ne diffèrent que par la forme du conduit de protection, comme cela sera expliqué ultérieurement.

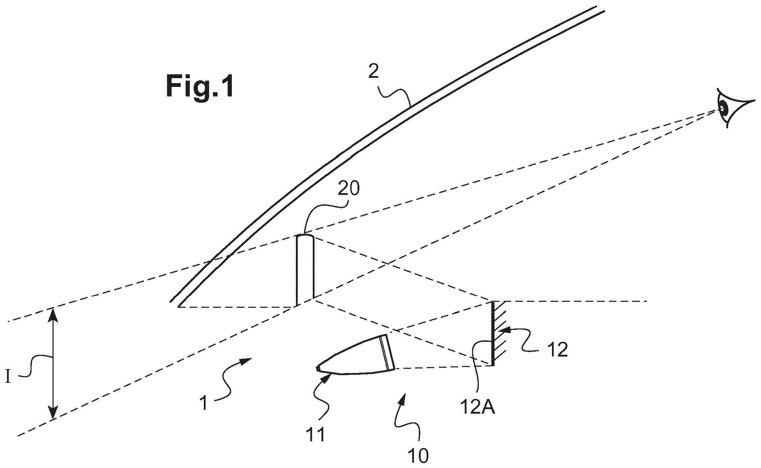

Sur la figure 1, on a représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard de la route.

A cet effet, l'afficheur 1 comprend une lame semi-transparente 20, placée dans le champ de vision du conducteur (voir figure 1), et un dispositif de projection 10 d'images adapté à générer une image et à l'envoyer en direction de la lame semi-transparente 20.

Plus précisément, le dispositif de projection 10 d'images comprend ici une unité de génération 11 d'images adaptée à générer des images.

L'unité de génération 11 est reliée à une ouverture 33 de sortie de la lumière par un conduit de protection 29 ; 30. Ce conduit de protection est délimité par une paroi interne. La section de ce conduit est ici trapézoïdale.

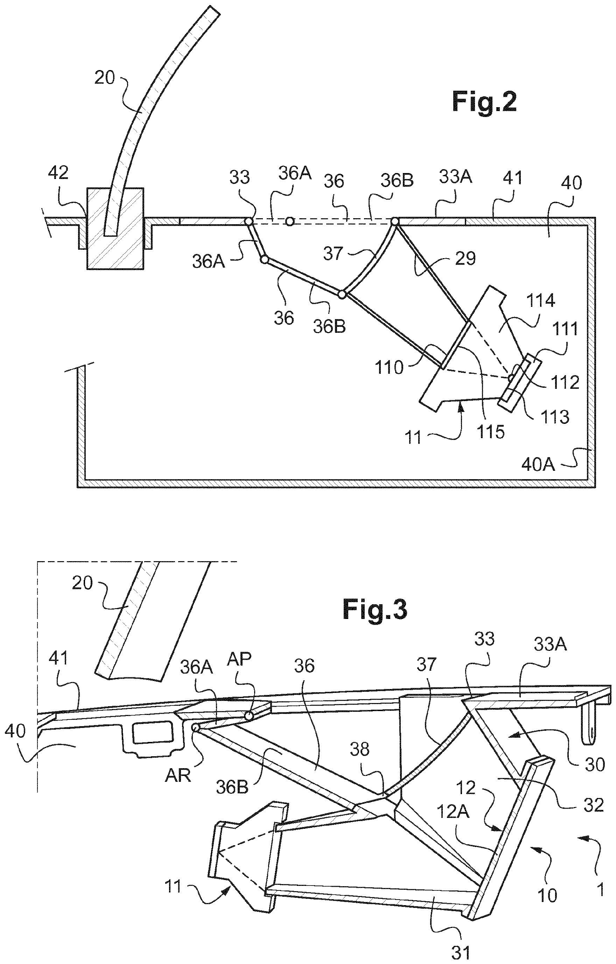

Dans un premier mode de réalisation représenté sur la figure 2, le conduit de protection 29 présente une forme droite. Il relie directement l'unité de génération d'image 11 à l'ouverture de sortie 33. Il ne comporte alors qu'une seule partie principale qui achemine la lumière de l'unité de génération d'image 11 vers l'ouverture de sortie 33, de telle sorte de la lumière se dirige ensuite sur la lame semi transparente 20.

Dans un deuxième mode de réalisation représenté sur les figures 1 et 3 à 5, le dispositif de projection 10 comporte en outre une unité de renvoi 12 de la lumière logée dans ledit conduit de protection 30.

Cette unité de renvoi 12 des images est adaptée à recevoir les images de l'unité de génération et à les renvoyer en direction de la lame semi-transparente 20.

Le conduit de protection 30 présente alors une forme coudée.

L'unité de génération d'images 11 est disposée à une première extrémité du conduit de protection 30.

Une première partie 31 de ce conduit de protection est adaptée à acheminer la lumière émise par l'unité de génération 11 jusqu'à l'unité de renvoi 12, située au coude du conduit.

Une deuxième partie 32 du conduit de protection 30 est adaptée à acheminer la lumière renvoyée par l'unité de renvoi 12 vers l'ouverture de sortie 33 du conduit de protection 30 située à sa deuxième extrémité.

La lumière qui traverse cette ouverture de sortie 33 se propage jusqu'à la lame semi-transparente 20 et l'image générée par l'unité de génération 11 et renvoyée par l'unité de renvoi 12 est ainsi projetée sur cette lame semi-transparente 20.

L'unité de renvoi 12 du dispositif de projection 10 comprend ici par exemple un miroir 12A de repliement. Ici, le miroir 12A est un miroir plan.

L'unité de renvoi 12 comprend également un support de fixation dudit miroir 12A, sur lequel ledit miroir est fixé, et qui comprend par ailleurs des moyens autorisant sa fixation sur le conduit 30 (figures 2, 3, 4 et 6).

Ici, le miroir 12A est fixé dans une fenêtre ménagée dans le conduit de protection 30, au niveau du coude de celui-ci.

En variante, l'unité de renvoi des images générées pourrait comprendre une pluralité de miroirs et/ou d'autres éléments optiques.

De préférence, quel que soit le mode de réalisation, le conduit de protection 30 est réalisé en une matière opaque, ce qui permet d'isoler les unités de génération et de renvoi d'images des sources de lumière extérieure auxdites unités. Ainsi, les images envoyées vers le combineur présentent une luminosité plus intense et leur netteté est améliorée.

Les figures 2 à 5 montrent le dispositif de projection 10 d'images de l'afficheur tête haute 1 en coupe et en détails.

L'unité de génération 11 d'images du dispositif de projection 10 comprend par exemple un écran 110 rétroéclairé par un module de rétroéclairage 111.

L'écran 110 est un écran à cristaux liquides (ou LCD pour *"Liquid Crystal Display*")*,* par exemple à transistors en couche mince (ou TFT pour *"Thin-Film Transistor"*)*.*

Le module de rétroéclairage 111 est représenté plus en détails sur la figure 2. Il comprend par exemple un ensemble de sources de lumière 112 disposées sur un support 113, et un réflecteur 114 associé à un diffuseur 115. Le support 113 des sources de lumière 112 est disposé au fond du réflecteur 114. Le diffuseur 115 est placé sur une extrémité du réflecteur 114 opposée aux sources de lumière 112, de manière à ce que l'ensemble composé du support 113, du réflecteur 114, et du diffuseur 115 forme une enceinte fermée.

Les sources de lumière 112 sont ici des diodes électroluminescentes (ou LED pour « Light Emitting Diode ») montées sur un circuit imprimé jouant le rôle de support 113.

Le réflecteur 114 peut être vu comme une boîte optique dont les parois sont illuminées sur leur face interne par l'ensemble des sources de lumière 112. Le réflecteur 114 est adapté à réfléchir la lumière de façon optimale pour que la luminosité soit homogène au niveau du diffuseur 115.

Le diffuseur 115 peut être réalisé au moyen d'un film ayant une face lisse tournée vers les sources de lumière 112 et une face grainée opposée, tournée vers l'écran 110, qui produit la diffusion de la lumière.

L'écran 110 est placé au contact du diffuseur 115, devant celui-ci, avec son plan d'extension parallèle à celui dudit diffuseur 115.

En variante, l'unité de de génération d'images pourrait comprendre un diffuseur et une unité de balayage qui génèrerait un faisceau lumineux de direction variable pour balayer une des faces dudit diffuseur.

L'unité de balayage comprendrait alors un module de formation d'un faisceau lumineux, par exemple formé de trois sources lumineuses monochromatiques, et un miroir mobile par exemple réalisé sous la forme d'un microsystème électromécanique (ou MEMS pour *"MicroElectroMechanical System').*

Le réflecteur 114 comprend de plus des moyens de montage sur ladite première extrémité du conduit de protection 30.

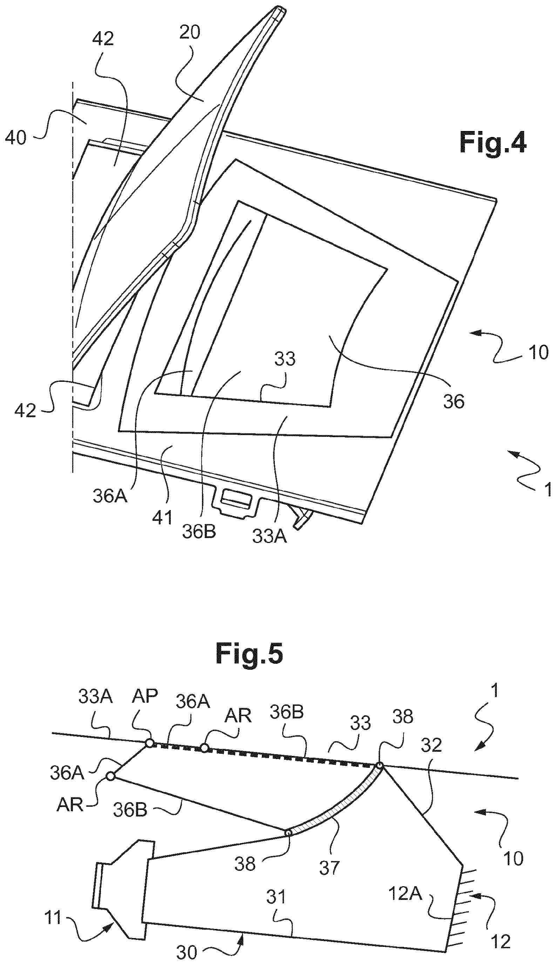

Le dispositif de projection 10 est ici logé dans un logement de protection 40 comprenant un caisson 40A (figures 2 et 4).

Le logement de protection 40 est de préférence réalisé en une matière plastique rigide et opaque.

Ainsi, avantageusement, le logement de protection 40 permet de protéger et de cacher les éléments optiques du dispositif de projection d'images. Il permet également de confiner le dispositif de projection d'images pour l'isoler de toute source de lumière parasite qui pourrait nuire à son bon fonctionnement.

Le conduit de protection 30 débouche au niveau de son ouverture de sortie 33 sur une paroi supérieure 41 de ce logement de protection 40 (voir notamment les figures 2 et 4).

Ici, le conduit de protection 30 comporte une paroi d'extrémité 33A qui encadre l'ouverture de sortie 33 et vient se placer dans le prolongement de la paroi supérieure 41 du logement de protection 40.

Dans l'exemple de réalisation de l'afficheur tête haute 1 décrit et représenté ici, la lame semi-transparente 20 est un combineur.

Il est ici placé entre le parebrise 2 du véhicule et les yeux du conducteur (figure 1).

En outre, de façon avantageuse, la lame semi-transparente 20 est ici rétractable dans le logement de protection 40 dudit dispositif de projection 10 d'images (voir figures 3 et 4).

Plus précisément, la lame semi-transparente 20 peut adopter deux positions distinctes : une position déployée dans laquelle elle fait saillie au dessus de la paroi supérieure 41 dudit logement de protection 40, et une position rétractée dans laquelle elle est logée à l'intérieur du logement de protection 40.

La lame semi-transparente 20 se déplace à cet effet à travers une fenêtre 42 ménagée dans ladite paroi supérieure 41 du logement de protection 40 (figures 2 à 4).

Ainsi, en position rétractée, la lame semi-transparente 20 est intégralement logée dans le logement de protection 30, à l'avant du dispositif de projection.

De manière à pouvoir passer facilement de la position rétractée à la position déployée, la lame semi-transparente 10 est montée sur des moyens de déplacement 11.

Ces moyens de déplacement sont adaptés à déplacer le combineur entre la position déployée et la position rétractée.

Ces moyens de déplacement 11 comprennent par exemple un ensemble d'engrenage et/ou de pignons et/ou de cames.

Ils sont motorisés par un moteur de type DC ou AC ou un moteur de type stepper.

De préférence, ces moyens de déplacement 11 assurent également le déplacement d'un couvercle venant protéger le combineur dans sa position rétractée.

En variante, on pourrait prévoir que la lame semi-transparente comprend une partie du parebrise du véhicule dans lequel le dispositif de projection est installé. Le combineur pourrait alors être omis (ainsi que les moyens de déplacement de celui-ci).

Le logement de protection 30 est ici intégré au tableau de bord du véhicule.

Le dispositif de projection 10 comporte en outre ici un volet 35 ; 36 de protection mobile en pivotement autour d'un axe de pivotement AP entre une position d'obturation dans laquelle il obture ladite ouverture de sortie 33 (figures 2 et 4) et une position de libération dans laquelle il libère ladite ouverture de sortie 33 (figures 3 et 5) de manière à permettre la projection des images.

Dans sa position de libération, le volet 35 ; 36 est logé à l'intérieur du conduit de protection 30.

Avantageusement, dans les modes de réalisation représentés sur les figures annexées, ledit volet 35 ; 36 est constitué d'un élément de paroi interne du conduit de protection 30. En d'autres termes, ledit volet de protection forme une partie de la paroi interne du conduit de protection.

Ainsi, la réalisation de ce volet ne nécessite pas d'ajout de matière dans le conduit de protection. Le dispositif de projection correspondant est particulièrement économique.

De préférence, le volet 35 ; 36 est réalisé en une matière résistante, étanche et opaque, de manière à protéger les unités de génération d'images et de renvoi de la poussière, des projections d'eau et du rayonnement ultra-violet ou infra-rouge qui pourrait les endommager ou limiter leurs performances.

De préférence, les dimensions dudit volet 36 sont telles que celui-ci est adapté à obturer complètement ladite ouverture dans la position d'obturation.

En d'autres termes, la forme et les dimensions du volet sont complémentaires, à un jeu près, à celles de l'ouverture de sortie.

On peut également envisager l'ajout d'un joint d'étanchéité périphérique le long du contour du volet afin de rendre l'obturation du conduit de protection par le volet étanche à l'eau.

De manière remarquable ici, ledit volet 36 comprend deux parties distinctes 36A, 36B mobiles l'une par rapport à l'autre.

Ainsi, le volet présent une géométrie variable. Le volet 36 peut notamment présenter une configuration de longueur réduite et une configuration de longueur plus étendue.

Les deux parties 36A, 36B du volet peuvent notamment adopter des positions relatives différentes de manière à ce que les dimensions hors tout de ce volet lorsque les deux parties se trouvent dans une première position relative lui permette d'être logé dans le conduit de protection et de manière à ce que les dimensions de ce volet lorsque les deux parties se trouvent dans une deuxième position relative lui permette d'obturer entièrement l'ouverture de sorite 33 du conduit de protection 30.

Ainsi le volet 36 peut se déployer entre les positions de libération et d'obturation de manière à ce que ce volet soit logé, dans la position de libération, dans un espace réduit et s'étende néanmoins, dans sa position d'obturation, sur l'ensemble de l'ouverture de sortie 33.

Ces deux parties 36A, 36B sont ici articulées entre elles.

Elles sont plus précisément articulées par une charnière. Les deux parties 36A, 36B pivotent l'une par rapport à l'autre autour d'un axe de repliement AR (figures 2, 3 et 5).

Plus précisément, lesdites deux parties 36A, 36B du volet 36 sont ici repliées de manière à former un premier angle non nul strictement inférieur à 180° entre elles dans la position de libération et sont dépliées dans la position d'obturation de manière à former un deuxième angle supérieur audit premier angle (figures 2 à 5).

Les deux parties 36A, 36B du volet 36 sont de préférence repliées dans la position de libération de manière à faire saillie vers l'extérieur du conduit de protection, de manière à libérer la section interne du conduit au maximum (figure 6).

En variante, on peut envisager que les deux parties coulissent l'une par rapport à l'autre.

De préférence, les deux parties 36A, 36B du volet 36 s'étendent dans le prolongement l'une de l'autre dans la position d'obturation du volet (voir figure 6).

Le volet 36 est ainsi plat et s'étend de préférence dans la continuité de la paroi d'extrémité 33A du conduit de protection 30.

Le volet 36 s'étend en outre de préférence dans le plan de la paroi d'extrémité 33A du conduit de protection 30, qui se trouve dans le prolongement de la paroi supérieure 41 du logement de protection 40 dans sa position de libération. Il s'étend à l'intérieur du conduit de manière à former une partie de la paroi interne de ce conduit dans sa position de libération.

Le volet 36 présente ici un contour de forme globalement rectangulaire ou trapézoïdale complémentaire de la forme de l'ouverture de sortie 33 du conduit de protection 30. L'un des côtés de ce rectangle ou de ce trapèze est ici légèrement incurvé vers l'intérieur, comme cela est visible sur les figures 3 et 5.

En variante, le volet peut présenter toute autre forme adaptée.

Une première extrémité du volet 36, c'est-à-dire ici un premier bord de ce volet 36 est monté mobile sur une partie du conduit de protection entourant ladite ouverture de sortie 33, ici sur la paroi d'extrémité 33A de ce conduit. Plus précisément, le volet 36 est articulé par une charnière disposée le long dudit premier bord de ce volet 36, à proximité de ladite ouverture de sortie 33. L'axe de pivotement AP du volet s'étend le long de ce premier bord du volet 36.

Le volet 36 s'étend ici à partir de ladite ouverture de sortie 33, sur un côté du conduit de protection 30 opposé à ladite unité de renvoi 12 (figures 2 et 4).

La charnière reliant le volet 36 à la paroi d'extrémité 33A du conduit de protection 30 et la charnière reliant les deux parties du volet s'étendent parallèlement. En d'autres termes, l'axe de pivotement AP du volet 36 s'étend parallèlement à l'axe de repliement AR de ce volet.

Le dispositif de projection 10 comporte en outre des moyens de guidage d'une deuxième extrémité de ce volet 36, opposée à la première, entre lesdites deux positions de ce volet.

Il s'agit ici de moyens de glissières, comprenant d'une part deux rainures 37 ménagées dans les parois latérales du conduit de protection et deux pions 38 disposés à proximité de la deuxième extrémité du volet, en saillie par rapport aux bords latéraux du volet adjacents audit premier bord (figure 3).

Le dispositif de projection 10 peut également comprendre des moyens de guidage de la jonction entre lesdites deux parties 36A, 36B du volet. Il peut s'agir de manière similaire de moyens de glissières comprenant deux rainures ménagées dans les parois latérales du conduit de protection et deux pions disposés selon l'axe de repliement du volet 36, en saillie de ce volet (non représentés ici).

Les moyens de guidage peuvent également comprendre des rails.

Le dispositif de projection comporte en outre de préférence un mécanisme d'obturation et de libération adapté à déplacer ledit volet entre ses deux positions d'obturation et de libération.

Ce mécanisme d'obturation et de libération est par exemple commandé par une unité de commande électronique de manière à ce que le volet se place automatiquement en position d'obturation lorsque le véhicule est à l'arrêt, ou plus généralement, lorsque le dispositif de projection est inutilisé.

Il peut s'agir d'un mécanisme commandé mécaniquement ou électroniquement.

De préférence, le mécanisme d'obturation et de libération adapté à déplacer ledit volet entre ses deux positions d'obturation et de libération est couplé auxdits moyens de déplacement du combineur de telle sorte que le déplacement du combineur vers sa position déployée entraîne le déplacement du volet vers sa position de libération, et le déplacement du combineur vers sa position rétractée entraîne le déplacement du volet vers sa position d'obturation.

Inversement, on peut envisager que le mécanisme d'obturation et de libération adapté à déplacer ledit volet entre ses deux positions d'obturation et de libération est couplé auxdits moyens de déplacement du combineur de telle sorte que le déplacement du volet vers sa position de libération entraîne le déplacement du combineur vers sa position déployée, et le déplacement du volet vers sa position d'obturation entraîne le déplacement du combineur vers sa position rétractée.

Ce couplage peut être mécanique ou électronique. Dans ce dernier cas, l'unité de commande électronique commande le mouvement du volet et le déplacement du combineur.

De préférence encore, le mouvement de l'une des deux parties 36A, 36B du volet 36 entre les positions d'obturation et de libération entraîne le mouvement de l'autre partie de ce volet.

Ici, on envisage plus précisément un couplage mécanique par l'intermédiaire des engrenages desdits moyens de déplacement 11 du combineur.

La partie 36B du volet 36 située à l'extrémité libre de celui-ci est par exemple reliée à l'un de ces engrenages. Cette liaison implique par exemple un ou plusieurs systèmes de découplage, de cames et de tiges.

Les engrenages et/ou pignons desdits moyens de déplacement 11 présentent des sillons gravés dans les roues dentées qui permettent de diriger vers différentes positions et à différentes vitesses les différents éléments : combineur, couvercle du combineur et volet.

Les pions disposés aux extrémités de la charnière s'étendant le long de l'axe de repliement coopèrent avec les rainures complémentaires. Le mouvement de la partie 36B du volet 36 située à l'extrémité libre de celui-ci entraîne alors le mouvement de l'autre partie 36A du volet 36.

Le combineur et le volet peuvent alors être actionnés à l'aide d'un unique moteur.

En variante, on peut envisager que la partie 36A du volet 36 qui est montée sur la paroi d'extrémité 3 du conduit de protection soit actionnée par un dispositif motorisé : celui-ci entraîne un mouvement de rotation de cette partie 36A autour de l'axe de la charnière reliant la partie 36A du volet à la paroi d'extrémité 33A du conduit de protection. Le bord de cette partie 36A opposée à cette charnière, qui est relié à l'autre partie 36B du volet, décrit une trajectoire circulaire (figure 5).

Ce faisant, la partie 36A du volet actionnée par le dispositif motorisé entraîne l'autre partie 36B du volet en mouvement : les pions disposés à la deuxième extrémité du volet glissent dans les rainures 37. Le dispositif motorisé peut avantageusement entraîner également simultanément le mouvement de déplacement du combineur.

En variante, on peut envisager que le volet soit muni par exemple d'une poignée et que son actionnement soit réalisé manuellement.

Cet actionnement manuel peut également entraîner le déplacement du combineur par un dispositif mécanique d'entraînement.

Inversement, on peut envisager que l'actionnement manuel ou motorisé du combineur entraîne le passage du volet de l'une à l'autre de ses deux positions.

Par ailleurs, lesdits moyens de déplacement du combineur sont adaptés à déplacer le combineur autour de sa position déployée sans déplacer ledit volet.

On prévoit en effet de préférence des moyens de réglage fins de la position du combineur dans sa position déployée dont la mise en œuvre est découplée du mécanisme d'obturation et de libération du volet. Cela est réalisé par exemple grâce à des jeux de cames disposés à l'intérieur de la roue dentée de l'engrenage des moyens de déplacements du combineur. Lors de ce réglage fin de position, aucun mouvement du volet n'est entraîné par le déplacement du combineur.

En variante, on peut envisager que les deux parties du volet soit mobiles en coulissement l'une par rapport à l'autre. On a décrit ici deux modes de réalisation dans lesquels le volet est formé par une paroi du conduit de protection du dispositif de projection.

En variante, on peut envisager que le volet comprend un élément d'obturation distinct de la paroi interne du conduit de protection. Il s'agit alors d'une plaque monté mobile en pivotement de manière tout à fait similaire au montage du volet décrit précédemment. Dans la position de libération, le volet s'étend alors contre la paroi interne du conduit de protection au lieu de former une partie de cette paroi interne.

Cet agencement présente l'avantage de permettre une fermeture complète du conduit de protection lorsque le volet est dans sa position d'obturation. La protection des unités de génération d'images et de renvoi est alors encore améliorée.

En variante encore, on peut envisager que le volet comporte une pluralité de parties dont au moins deux sont mobiles l'une par rapport à l'autre.

## Revendications

1. Dispositif de projection (10) d'images pour afficheur tête haute (1) comprenant une unité de génération (11) d'images et un conduit de protection (30) reliant cette unité de génération (11) d'images à une ouverture (33) autorisant la projection, à l'extérieur du conduit de protection (30), de l'image générée par l'unité de génération, et comportant un volet (36) de protection mobile en pivotement entre une position d'obturation dans laquelle il obture ladite ouverture et une position de libération dans laquelle il est logé dans le conduit de protection et libère ladite ouverture de manière à permettre la projection desdites images, **caractérisé en ce que** ledit volet (36) comprend deux parties (36A, 36B) mobiles l'une par rapport à l'autre.

2. Dispositif de projection (10) selon la revendication 1, dans lequel ledit volet (35 ; 36) est constitué d'un élément de paroi interne du conduit de protection (30).

3. Dispositif de projection selon la revendication 1, dans lequel ledit volet comprend un élément d'obturation distinct de la paroi interne du conduit de protection.

4. Dispositif de projection (10) selon l'une des revendications précédentes, dans lequel lesdites deux parties (36A, 36B) du volet (36) sont articulées entre elles.

5. Dispositif de projection (10) selon l'une des revendications 1 à 3, dans lequel lesdites deux parties (36A, 36B) sont repliées de manière à former un premier angle non nul strictement inférieur à 180° entre elles dans la position de libération et sont dépliées dans la position d'obturation de manière à former un deuxième angle supérieur audit premier angle.

6. Dispositif de projection (10) l'une des revendications 1 à 5, dans lequel le mouvement de l'une des deux parties (36A, 36B) du volet (36) entraîne le mouvement de l'autre partie.

7. Dispositif de projection (10) selon l'une des revendications 1 à 6, dans lequel ledit volet (36) est monté mobile sur une partie du conduit de protection (30) entourant ladite ouverture (33), à une première extrémité de ce volet (36).

8. Dispositif de projection (10) selon l'une des revendications 1 à 6, dans lequel il est prévu en outre des moyens de guidage (37, 38) d'une deuxième extrémité de ce volet (36), opposée à la première, entre lesdites deux positions du volet de protection.

9. Dispositif de projection (10) selon l'une des revendications précédentes, dans lequel il est prévu en outre, dans le conduit de protection, une unité de renvoi (12) des images générées, autorisant l'acheminement des images générées par le dispositif de génération (11) d'image vers ladite ouverture.(33)

10. Afficheur tête haute (1) comprenant un dispositif de projection (10) d'images selon l'une des revendications précédentes, et une lame semi-transparente sur laquelle sont projetées les images générées par l'unité de génération (11) d'images.

11. Afficheur tête haute (1) selon la revendication 10, dans lequel la lame semi-transparente est un combineur (20) rétractable dans un logement de protection (40) dudit dispositif de projection (10) d'images.

12. Afficheur tête haute (1) selon la revendication 11, dans lequel il est prévu des moyens de déplacement du combineur adaptés à déplacer le combineur entre une position déployée dans laquelle il fait saillie par rapport audit logement de protection (40) du dispositif de projection (10) d'images, et une position rétractée dans laquelle il est logé à l'intérieur dudit logement de protection (40) du dispositif de projection (10) d'images et dans lequel le dispositif de projection comprend un mécanisme d'obturation et de libération adapté à déplacer ledit volet (36) entre ses deux positions d'obturation et de libération, qui est couplé auxdits moyens de déplacement du combineur de telle sorte que le déplacement du combineur vers sa position déployée soit couplé au déplacement du volet (36) vers sa position de libération, et que le déplacement du combineur vers sa position rétractée soit couplé le déplacement du volet (36) vers sa position d'obturation.

13. Afficheur tête haute (1) selon la revendication 12, dans lequel lesdits moyens de déplacement (11) du combineur (20) sont adaptés à déplacer le combineur (20) autour de sa position déployée sans déplacer ledit volet (36).

14. Afficheur tête haute (1) selon la revendication 10, dans lequel la lame semi-transparente comprend une partie du parebrise d'un véhicule dans lequel le dispositif de projection est installé.

## Patentansprüche

1. Bildprojektionsvorrichtung (10) für ein Head-up-Display (1), umfassend eine Bilderzeugungseinheit (11) und einen Schutzkanal (30), der diese Bilderzeugungseinheit (11) mit einer Öffnung (33) verbindet, welche die Projektion, außerhalb des Schutzkanals (30), des von der Erzeugungseinheit erzeugten Bildes zulässt, und beinhaltend eine Schutzklappe (36), die schwenkbeweglich ist zwischen einer Verschlussstellung, in der sie die Öffnung verschließt, und einer Freigabestellung, in der sie in dem Schutzkanal aufgenommen ist und die Öffnung so freigibt, dass die Projektion der Bilder ermöglicht wird, **dadurch gekennzeichnet, dass** die Klappe (36) zwei Teile (36A, 36B) umfasst, die zueinander beweglich sind.

2. Projektionsvorrichtung (10) nach Anspruch 1, bei der die Klappe (35; 36) aus einem Innenwandelement des Schutzkanals (30) besteht.

3. Projektionsvorrichtung nach Anspruch 1, bei der die Klappe ein Verschlusselement umfasst, das von der Innenwand des Schutzkanals verschieden ist.

4. Projektionsvorrichtung (10) nach einem der vorhergehenden Ansprüche, bei der die beiden Teile (36A, 36B) der Klappe (36) aneinander angelenkt sind.

5. Projektionsvorrichtung (10) nach einem der Ansprüche 1 bis 3, bei der die beiden Teile (36A, 36B) in der Freigabestellung zusammengeklappt sind, so dass ein erster Winkel ungleich null von strikt kleiner als 180° zwischen ihnen gebildet wird, und in der Verschlussstellung auseinandergeklappt sind, so dass ein zweiter Winkel gebildet wird, der größer als der erste Winkel ist.

6. Projektionsvorrichtung (10) nach einem der Ansprüche 1 bis 5, bei der die Bewegung des einen der beiden Teile (36A, 36B) der Klappe (36) die Bewegung des anderen Teils nach sich zieht.

7. Projektionsvorrichtung (10) nach einem der Ansprüche 1 bis 6, bei der die Klappe (36) beweglich an einem Teil des Schutzkanals (30), der die Öffnung (33) umgibt, an einem ersten Ende dieser Klappe (36) montiert ist.

8. Projektionsvorrichtung (10) nach einem der Ansprüche 1 bis 6, bei der ferner Führungsmittel (37, 38) zum Führen eines zweiten Endes dieser Klappe (36), das zum ersten entgegengesetzt ist, zwischen den beiden Stellungen der Schutzklappe vorgesehen sind.

9. Projektionsvorrichtung (10) nach einem der vorhergehenden Ansprüche, bei der ferner in dem Schutzkanal eine Umlenkeinheit (12) für die erzeugten Bilder vorgesehen ist, die das Weiterleiten der von der Bilderzeugungsvorrichtung (11) erzeugten Bilder zu der Öffnung (33) hin zulässt.

10. Head-up-Display (1), umfassend eine Bildprojektionsvorrichtung (10) nach einem der vorhergehenden Ansprüche und eine halbtransparente Scheibe, auf welche die von der Bilderzeugungseinheit (11) erzeugten Bilder projiziert werden.

11. Head-up-Display (1) nach Anspruch 10, bei dem die halbtransparente Scheibe ein Kombinator (20) ist, der in eine Schutzaufnahme (40) der Bildprojektionsvorrichtung (10) versenkbar ist.

12. Head-up-Display (1) nach Anspruch 11, bei dem Verlagerungsmittel des Kombinators vorgesehen sind, die geeignet sind, den Kombinator zwischen einer ausgefahrenen Stellung, in der er in Bezug auf die Schutzaufnahme (40) der Bildprojektionsvorrichtung (10) hervorragt, und einer versenkten Stellung, in der er im Inneren der Schutzaufnahme (40) der Bildprojektionsvorrichtung (10) aufgenommen ist, zu verlagern, und bei dem die Projektionsvorrichtung einen Verschluss- und Freigabemechanismus umfasst, der geeignet ist, die Klappe (36) zwischen ihren beiden Verschluss- und Freigabestellungen zu verlagern, der an die Verlagerungsmittel des Kombinators derart gekoppelt ist, dass die Verlagerung des Kombinators in seine ausgefahrene Stellung an die Verlagerung der Klappe (36) in ihre Freigabestellung gekoppelt ist und dass die Verlagerung des Kombinators in seine versenkte Stellung an die Verlagerung der Klappe (36) in ihre Verschlussstellung gekoppelt ist.

13. Head-up-Display (1) nach Anspruch 12, bei dem die Verlagerungsmittel (11) des Kombinators (20) geeignet sind, den Kombinator (20) um seine ausgefahrene Stellung herum zu verlagern, ohne die Klappe (36) zu verlagern.

14. Head-up-Display (1) nach Anspruch 10, bei dem die halbtransparente Scheibe einen Teil der Windschutzscheibe eines Fahrzeugs umfasst, in das die Projektionsvorrichtung eingebaut ist.

## Claims

1. Image projection device (10) for a head-up display (1) comprising an image generation unit (11) and a protective conduit (30) connecting this image generation unit (11) to an opening (33) that allows the image generated by the generation unit to be projected out of the protective conduit (30) and that comprises a protective flap (36) able to pivot between a closing-off position in which it closes off said opening and a non-obstructing position in which it is housed in the protective conduit and is clear of said opening so as to allow said images to be projected, **characterized in that** said flap (36) comprises two parts (36A, 36B) able to move one relative to the other.

2. Projection device (10) according to Claim 1, wherein said flap (35; 36) is made up of an element of an internal wall of the protective conduit (30).

3. Projection device according to Claim 1, wherein said flap comprises a closing-off element distinct from the internal wall of the protective conduit.

4. Projection device (10) according to one of the preceding claims, wherein said two parts (36A, 36B) of the flap (36) are hinged together.

5. Projection device (10) according to one of Claims 1 to 3, wherein said two parts (36A, 36B) are folded so as to form a first non-zero angle strictly smaller than 180° with respect to one another in the non-obstructing position and are unfolded into the closing-off position so as to form a second angle greater than said first angle.

6. Projection device (10) according to one of Claims 1 to 5, wherein the movement of one of the two parts (36A, 36B) of the flap (36) leads to movement of the other part.

7. Projection device (10) according to one of Claims 1 to 6, wherein said flap (36) is mounted with the ability to move on a part of the protective conduit (30) surrounding said opening (33), at a first end of this flap (36).

8. Projection device (10) according to one of Claims 1 to 6, wherein guide means (37, 38), for guiding a second end of this flap (36), opposite to the first end, between said two positions of the protective flap, are also provided.

9. Projection device (10) according to one of the preceding claims, in which a reflecting unit (12) for reflecting the generated images, is also provided, in the protective conduit, so that the images generated by the image generation device (11) can be routed towards said opening (33).

10. Head-up display (1) comprising an image projection device (10) according to one of the preceding claims, and a beam splitter plate onto which the images generated by the image generation unit (11) are projected.

11. Head-up display (1) according to Claim 10, wherein the beam splitter plate is a combiner (20) that can be retracted into a protective housing (40) of said image projection device (10).

12. Head-up display (1) according to Claim 11, wherein means for moving the combiner which are designed to move the combiner between a deployed position in which it projects with respect to said protective housing (40) of the image projection device (10) and a retracted position in which it is housed inside said protective housing (40) of the image projection device (10) are provided, and wherein the projection device comprises a closing-off and uncovering mechanism able to move said flap (36) between its two, closing-off and non-obstructing, positions, and which is coupled to said means for moving the combiner so that the moving of the combiner towards its deployed position is coupled to the movement of the flap (36) towards its non-obstructing position, and so that the movement of the combiner towards its retracted position is coupled with the moving of the flap (36) towards its closing-off position.

13. Head-up display (1) according to Claim 12, wherein said movement means (11) for moving the combiner (20) are designed to move the combiner (20) about its deployed position without moving said flap (36).

14. Head-up display (1) according to Claim 10, wherein the beam splitter plate comprises part of the windscreen of a vehicle in which the projection device is installed.
